# EUROPÄISCHE PATENTSCHRIFT

(11) **EP 4 369 249 B1**
(45) Veröffentlichungstag und Bekanntmachung des Hinweises auf die Patenterteilung: **18.03.2026**
(21) Anmeldenummer: 23200257.6
(22) Anmeldetag: 27.09.2023
(51) Int. Cl.: G06K 19/077

(54) **VERFAHREN ZUR HERSTELLUNG EINER ANTENNE IN EINEM KUNSTSTOFFKÖRPER**
METHOD OF MANUFACTURING ANTENNA IN PLASTIC BODY
PROCÉDÉ DE FABRICATION D'UNE ANTENNE DANS UN CORPS EN PLASTIQUE

(30) Priorität: 09.11.2022 DE 102022129584
(43) Veröffentlichungstag der Anmeldung: 15.05.2024
(73) Patentinhaber: Mühlbauer ID Services GmbH, 93426 Roding (DE)
(72) Erfinder: Kusin, Dieter, 93426 Roding (DE); Ederer, Martin, 93426 Roding (DE); Brunner, Anton, 93426 Roding (DE); Jelinek, Lukas, 93426 Roding (DE)
(74) Vertreter: noventive Patentanwaltsgesellschaft mbH

(56) Entgegenhaltungen:
- DE-A1- 102006 059 454
- DE-A1- 102009 050 199
- JP-A- 2001 092 936
- US-A1- 2004 082 189
- US-A1- 2005 072 595
- US-A1- 2012 175 422

## Beschreibung

Die Erfindung betrifft ein Verfahren zur Herstellung einer Antenne, insbesondere einer HF-Antenne, in einem Kunststoffkörper, insbesondere in einem Sicherheitsdokument aus Kunststoff.

Insbesondere im Bereich der Sicherheitsdokumente, gehören flache Kleinstdatenspeicher, wie RFID-Chips (radio-frequency identification), zum Stand der Technik, um Informationen zu speichern und auslesbar zu machen. Die Informationen können dabei auch als Sicherheitsmerkmal verwendet werden, um die Fälschungssicherheit des Dokuments zu erhöhen. Die RFID-Chips werden dazu in einem Kunststoffkörper eingearbeitet, wobei der Kunststoffkörper als kartenförmiges Dokument dient.

RFID-Chips weisen keine eigene autarke Stromversorgung auf, sondern verfügen über Antennen, sog. HF-Antennen (high frequency), welche elektromagnetische Strahlung eines Auslesegeräts des RFID-Chips in einen Stromfluss umwandeln, der ausreicht, um das passive Speichermedium (den RFID-Chip) mit Strom zu versorgen und so den Zugriff auf die gespeicherten Informationen zu ermöglichen. Eine derartige Anordnung ist beispielsweise in der Druckschrift JP 2001 92 936 A offenbart. Die Antenne ist dabei spiralförmig in dem Kartenkörper eingelassen und weist ein inneres Ende und ein äußeres Ende auf. Um eine Stromversorgung des RFID-Chips sicherzustellen, müssen beide Enden mit dem RFID-Chip verbunden werden. Folglich ist es notwendig, dass eine der beiden Enden über Leitungswindungen der Antenne geführt wird, ohne dass dabei ein Kurzschluss erzeugt wird.

Es gibt dabei mehrere Methoden eine HF-Antennenstruktur im Kartenkörper vorzusehen. Zum einen besteht die Möglichkeit einen isolierten Kupferdraht anhand einer hochfrequent oszillierenden Klopfbewegung auf einem Träger zu verlegen. Alternativ kann eine bereits fertige Antennenstruktur auf den Träger aufgebracht werden, wobei die Antennenstruktur entweder aus einer Aluminiumfolie herausgeätzt oder herausgefräst wurde. Eine weitere Möglichkeit besteht darin, die Antenne beispielsweise mittels eines Siebdrucks und flüssiger, elektrisch leitfähiger Tinte auf dem Träger vorzusehen. Leitfähige Tinte weist dabei einen hohen Anteil von Nanopartikeln eines leitfähigen Materials wie Kupfer, Kohlenstoff oder Silber auf. Die vorliegende Erfindung bezieht sich dabei auf die letztgenannte Art zur Herstellung einer Antenne in einem Kunststoffkörper. Ein derartiges Verfahren ist aus der Druckschrift US 2012 175 422 A1 bekannt. Die Enden der spiralförmigen Antennenstruktur werden dabei durch eine isolierte Brücke, welche über die Leitungen der Antennenstruktur reicht, miteinander verbunden.

Die Druckschrift US 2004 082 189 A1 betrifft ein Herstellungsverfahren einer Leiterplatte, wobei eine leitende Paste in Hohlräume einer Trägerplatte aus Harz eingebracht wird und von einer Laminierungsschicht bedeckt wird. Die Laminierung der Laminierungsschicht mit dem Harz sowie das Sintern der leitenden Paste in dem Hohlraum erfolgt dabei gleichzeitig. Die Druckschrift US 2005 072 595 A1 offenbart ebenfalls ein Herstellungsverfahren einer Leiterplatte.

Dokument DE 10 2009 050 199 A1 beschreibt dieses kombinierte Verfahren explizit als Kern seiner Lehre, um die elektrische Leitfähigkeit von Leiterstrukturen auf temperaturempfindlichen Folien zu verbessern. Die Verbindung zwischen verschiedenen Leiterbahnebenen wird hierbei jedoch durch Durchkontaktierungen ("Kontaktfenster") und nicht durch eine planare, gedruckte Brückenstruktur realisiert.

Dokument DE 10 2006 059 454 A1 erwähnt das simultane Sintern und Laminieren ebenfalls, jedoch nur im spezifischen Kontext der elektrischen Kontaktierung eines dünnen Silizium-Chips mit den Antennenanschlüssen. Es dient hier als alternative Methode zum Bonden und nicht zur Herstellung der Antennenspule selbst. Eine gedruckte Brückenstruktur zur Kreuzung von Leiterbahnen wird in D6 nicht offenbart; stattdessen fungiert der Chip selbst als Brücke oder die Antenne läuft unter dem Chip hindurch.

Vor dem geschilderten Hintergrund des Stands der Technik ist es Aufgabe der vorliegenden Erfindung ein zeit- und kosteneffizientes Verfahren zur Herstellung einer Antenne in einem Kunststoffkörper sowie ein Kunststoffkörper zur Verwendung in einem Sicherheitsdokument und ein Sicherheitsdokument mit einer durch das erfindungsgemäße Verfahren hergestellten Antenne bereitzustellen.

Diese Aufgabe wird durch die Gegenstände der unabhängigen Ansprüche gelöst. Vorteilhafte Ausbildungsformen der Erfindung sind in den Unteransprüchen enthalten.

Das erfindungsgemäße Verfahren zur Herstellung einer Antenne in einem Kunststoffkörper weist mehrere Schritte auf. Zunächst wird eine leitfähige Tinte, vorzugsweise mittels eines Siebdruckverfahrens, auf einem Träger derart aufgebracht, dass sie eine spiralförmige Antennenstruktur mit einem inneren und einem äußeren Ende bildet, wobei das innere Ende innerhalb und das äußere Ende außerhalb von Leiterbahnen der spiralförmigen Antennenstruktur angeordnet sind. In einem nächsten Schritt wird eine Brücke, bestehend aus einem Isolationselement, vorzugsweise aus einem Duroplast, und einem Leiterelement, auf den Träger aufgebracht, wobei die Brücke derart angeordnet wird, dass das Leiterelement eines der Enden der Antennenstruktur über wenigstens einen Teil der Leiterbahnen der spiralförmigen Antennenstruktur mit einem Punkt auf der anderen Seite der Leiterbahnen elektrisch verbindet und das Leiterelement gegen die Leiterbahnen durch das Isolationselement elektrisch isoliert ist. Schließlich wird der Träger mit wenigstens einer Laminatschicht, welche die Antennenstruktur vollständig bedeckt, laminiert, wobei die Temperatur und Dauer des Laminierens derart gewählt werden, dass die Antenne während des Laminierens gesintert wird. Die Laminatschicht und der Träger bilden dabei den Kunststoffkörper. Durch den Vorgang wird die Antennenstruktur zur Antenne gesintert.

Durch das Sintern der in der Antennenstruktur aufgebrachten Tinte verbinden sich die Nanopartikel, um so die Leitfähigkeit zu erhöhen und die Antenne zu bilden. Dies betrifft insbesondere auch die Verbindungsstellen zwischen dem Leiterelement der Brücke und der durch die leitende Tinte bereitgestellten Antennenstruktur. Vorzugsweise weist das Leiterelement der Brücke das gleiche leitende Material auf wie die leitfähige Tinte, um so eine Verbindung der beiden Elemente während des Sintervorgangs zu ermöglichen. Die Brücke stellt sicher, dass die beiden Enden der Antenne auf der gleichen Seite der Leiterbahnen (Leiterwindungen) angeordnet sind und somit beide mit einem elektrischen Bauteil, wie beispielsweise einem RFID-Element verbunden werden können. Die Installation eines RFID-Chips und dessen Verbindung mit der Antennenstruktur geschieht dabei vorzugsweise vor dem Laminieren der Laminatschicht auf dem Träger, sodass der RFID-Chip ebenfalls vollständig von der Laminatschicht bedeckt und damit geschützt sein kann und die elektrische Verbindung zwischen Chip und den Enden der Antenne sichergestellt werden kann.

Die zur Antennenstruktur auf den Träger aufzubringende Tinte weist vorzugsweise eine pastöse Konsistenz auf. Somit kann verhindert werden, dass die gewünschte Antennenstruktur durch ein Verfließen der Tinte beschädigt wird. Insbesondere beim Auftragen mittels Siebdruckverfahrens ist eine pastöse Konsistenz der Tinte vorteilhaft.

In einer vorteilhaften Ausführungsform der Erfindung erfolgt das Aufbringen der Brücke durch sowohl ein Aufbringen des Isolationselements als auch das anschließende Aufbringen des Leiterelements auf dem Isolationselement mittels eines Druckverfahrens, insbesondere bevorzugt mittels eines Siebdruckverfahrens. Auf diese Weise können sowohl das Isolationselement als auch das Leiterelement positionsgenau aufgebracht werden und ein Kurzschluss des Leiterelements mit den Leiterbahnen der Antennenstruktur verhindert werden. Das Aufbringen des Isolationselements erfolgt dabei vorzugsweise nachdem die Antennenstruktur zumindest teilweise angetrocknet ist. Dabei wird vorzugsweise zur Herstellung des Isolationselements und der Antennenstruktur das gleiche Material verwendet. Somit kann sichergestellt werden, dass sich im anschließenden Sintervorgang die Antennenstruktur und das Leiterelement gut verbinden können.

Generell wird vorzugsweise das Aufbringen einer Tinte auf einem Träger zum Ausbilden einer spiralförmige Antennenstruktur und das Aufbringen einer Brücke (bestehend aus einem Isolationselement und einem Leiterelement) mittels jeweils separaten Druckverfahren vorgenommen. Dies bedeutet, dass es sich dabei vorzugsweise um zeitlich voneinander getrennte Druckverfahren handelt, weiter vorzugsweise zeitlich voneinander getrennte Siebdruckverfahren handelt.

In einer alternativen vorteilhaften Ausführungsform zum Aufbringen der Brücke auf dem Träger, wird ein vorgefertigtes Isolationselement bereitgestellt, welches zwei Verbindungsöffnungen aufweist. Auf das Isolationselement wird anschließend, bevorzugt mittels Druckverfahren, insbesondere bevorzugt mittels Siebdruckverfahren, ein Leiterelement derart aufgebracht, dass es durch die Verbindungsöffnungen elektrische Kontaktpunkte bilden kann. Wir ein RFID-Chip entsprechend mit den elektrischen Kontaktpunkten in Verbindung gebracht, kann ein Stromfluss zwischen Antenne und Chip sichergestellt werden. Die elektrischen Kontaktpunkte definieren somit die Positionen, an denen die Brücke den in der Antenne erzeugten Stromfluss übertragen kann.

Eine weitere alternative Ausführungsform zum Aufbringen der Brücke auf dem Träger stellt die Verwendung eines isolierten Leiterelements dar. Das isolierte Leiterelement ist dadurch definiert, dass im Querschnitt um das Leiterelement das Isolationselement angeordnet ist und das Leiterelement in radialer Richtung isoliert. Dieses isolierte Leiterelement wird dabei über die Leiterbahnen gelegt und an einem axialen Endpunkt mit der Antennenstruktur mittels eines thermischen Verfahrens wie beispielsweise Schweißen verbunden. Am anderen axialen Endpunkt kann der durch die Antenne erzeugte Stromfluss abgegriffen werden.

Vorzugsweise wird dabei das isolierte Leiterelement mittels einer oszillierenden Schlagbeanspruchung auf den Träger aufgebracht. Die dadurch erzeugte Wärmeenergie führt zu einer Verformung des Isolationselement, wodurch eine kraftschlüssige Verbindung zwischen der Brücke und dem Träger bzw. der Leiterbahnen gebildet wird.

In einer vorteilhaften Ausführungsform der Erfindung wird die Brücke aus Isolationselement und Leiterelement zunächst vorgefertigt und anschließend im vorgefertigten Zustand auf dem Träger montiert. Der vorgefertigte Zustand ist dabei dadurch gekennzeichnet, dass das Isolationselement und das Leiterelement bereits miteinander verbunden sind, bevor sie auf den Träger aufgebracht werden.

In einer weiteren vorteilhaften Ausführungsform der Erfindung erfolgt das Laminieren des Trägers und der Laminatschicht anhand einer Laminationskurve, wobei der Träger und die Laminatschicht innerhalb von 30 min auf eine festgelegte Zieltemperatur, insbesondere 190 °C, erhitzt werden und anschließend gleichmäßig innerhalb von 30 min wieder abgekühlt werden. Auf diese Weise können saubere Ergebnisse sowohl des Laminationsprozesses als auch des Sinterprozesses zur Bildung der Antenne sichergestellt werden. Weiterhin bevorzugt ist eine Laminationskurve, bei der die Temperatur für einen festgelegten Zeitraum, beispielsweise 7 min, konstant gehalten wird.

Vorzugsweise erfolgt das Laminieren dabei zumindest teilweise zusätzlich unter der Aufbringung von Druck auf die Laminationspartner, also wenigstens den Träger und der Laminatschicht.

Ein durch das Verfahren hergestellter Kunststoffkörper weist eine spiralförmige Antenne auf, welche zwischen einem Träger und wenigstens einer Laminatschicht angeordnet ist, wobei die Antenne ein inneres Ende und ein äußeres Ende aufweist und das innere Ende innerhalb und das äußere Ende außerhalb von Leiterbahnen der spiralförmigen Antennenstruktur angeordnet ist. Der Kunststoffkörper weist weiterhin eine Brücke mit einem Isolationselement und einem Leiterelement auf, wobei das Isolationselement zwei Verbindungsöffnungen aufweist, welche durch das Leiterelement verbunden werden. Die Brücke ist dabei derart angeordnet, dass das Leiterelement in einer Verbindungsöffnung mit einem Ende der Antenne verbunden ist und die andere Verbindungsöffnung sich auf der anderen Seite der Leiterbahnen befindet, wobei weiterhin das Leiterelement durch das Isolationselement von den Leiterbahnen isoliert ist. Ein derartiger Kunststoffköper stellt eine Antenne für die Verwendung in einem Sicherheitselement in Zusammenhang mit einem RFID-Chip bereit und kann daher in einem Sicherheitselement eingesetzt werden.

Das erfindungsgemäße Sicherheitsdokument weist wenigstens eine durch das erfindungsgemäße Verfahren hergestellte Antenne auf.

Im Folgenden werden Ausführungsformen und positive Aspekte der Erfindung anhand der beigefügten Zeichnungen näher erläutert.
- Fig. 1: zeigt das Aufbringen einer Antennenstruktur 10 auf einen Träger 20 gemäß einer Ausführungsform des erfindungsgemäßen Verfahrens
- Fig. 2a: zeigt einen ersten Schritt zum Aufbringen einer Brücke 70 in einer ersten Ausführungsform
- Fig. 2b: zeigt einen zweiten Schritt zum Aufbringen einer Brücke 70 in der ersten Ausführungsform
- Fig. 3: zeigt schematisch das Laminieren des Trägers 20 mit zwei Laminationsschichten 60 gemäß dem erfindungsgemäßen Verfahren
- Fig. 4a: zeigt eine zweite erfindungsgemäße Ausführungsform zum Aufbringen einer Brücke 70 im Rahmen des erfindungsgemäßen Verfahrens
- Fig. 4b: zeigt ein Beispiel eines Querschnitts eines isolierten Leiters, welcher als Brücke 70 im Rahmen des erfindungsgemäßen Verfahrens eingesetzt werden kann
- Fig. 5a: zeigt eine dritte Ausführungsform einer Brücke 70, welche im Rahmen des erfindungsgemäßen Verfahrens auf den Träger 20 aufgebracht wird
- Fig. 5b: zeigt einen Querschnitt der in Fig. 5a gezeigten Brücke 70

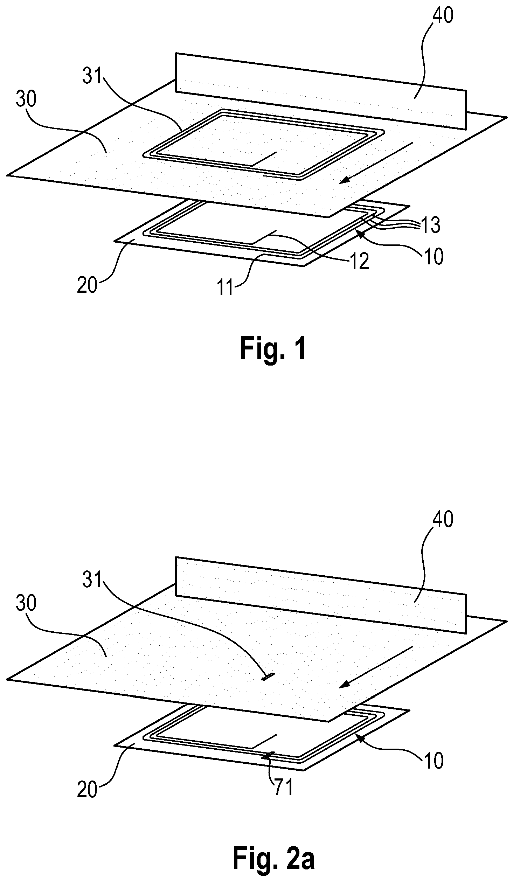

**Fig. 1** zeigt das Aufbringen einer Antennenstruktur 10 aus einer leitfähigen Tinte auf einen Träger 20 und stellt somit den ersten Schritt des erfindungsgemäßen Verfahrens dar. Die leitfähige Tinte weist Nanopartikel eines leitenden Materials auf, welche den Stromfluss ermöglichen. Der Träger 20 besteht dabei aus Kunststoff und dient einer Antennenstruktur 10 als Unterlage. Die Antennenstruktur 10 wird durch ein Siebdruckverfahren erzeugt, wobei flüssige leitfähige Tinte, insbesondere mit einer pastösen, also zähflüssigen Konsistenz, anhand eines vorzugsweise elastischen Rakels 40 durch eine Sieböffnung 31 eines Siebs 30 gedrückt wird. Das Sieb 30 wird auf den Träger 20 aufgelegt und die Tinte durch eine anhand des Pfeils in Fig. 1 dargestellte Bewegung des Rakels 40 über das Sieb 30 gezogen. Die Tinte bleibt dabei in den Sieböffnungen 31 hängen und wird auf den Träger 20 gedrückt, wodurch das Muster der Sieböffnungen 31 auf dem Träger 20 als Antennenstruktur 10 zurückbleibt.

Dadurch wird die spiralförmige Antennenstruktur 10 aus der leitfähigen Tinte auf dem Träger 20 gebildet. In der gezeigten Ausführungsform ist die spiralförmige Struktur ebenfalls als Rechteck angeordnet, was einer typischen Geometrie einer Antennenstruktur 10 entspricht. Die Antennenstruktur 10 weist dabei mehrere Leiterwindungen bzw. Leiterbahnen 13 sowie ein äußeres Ende 11 und ein inneres Ende 12 auf, welches nach innen, also in Richtung des Zentrums der Antennenstruktur 12 abgewinkelt ausgeführt ist. Das äußere Ende 11 befindet sich außerhalb der Leiterbahnen 13 und das innere Ende 12 innerhalb.

Um die Antenne im Rahmen eines eingangs beschriebenen Verwendungszwecks im Zusammenhang mit einem RFID-Chip verwenden zu können, müssen jedoch beide Enden 11, 12 der Antennenstruktur 10 mit einem RFID-Chip verbunden werden können, um einen Stromfluss zum RFID-Chip zu ermöglichen. Hierzu muss entweder das innere Ende 12 über die Leiterbahnen 13 nach Außen oder das äußere Ende 11 nach Innen geleitet werden. Dabei darf keine elektrische Verbindung zwischen den Enden und den Leiterbahnen 13 entstehen, da sonst ein Kurzschluss entsteht und kein Stromfluss zum RFID-Chip hergestellt werden kann. Hierzu muss eine Brücke 70 über die Leiterbahnen 13 gelegt werden, um die elektrische Isolierung sicherzustellen.

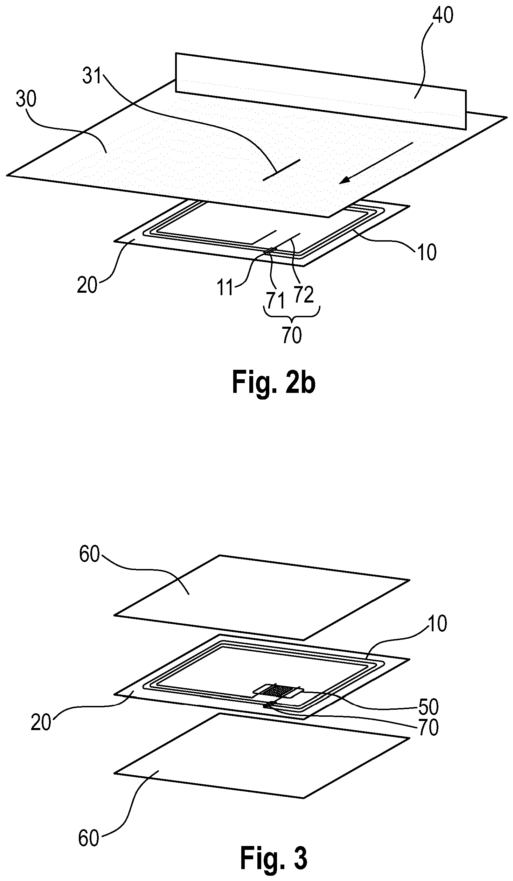

Eine erste Ausführungsform zur Herstellung einer Brücke 70 wird in den **Figs. 2a** und **2b** gezeigt. Die Brücke 70 setzt sich aus einem Isolationselement 71 und einem Leiterelement 72 zusammen. In einem ersten Schritt wird bei der in Fig. 2a dargestellten Ausführungsform das Isolationselement 71 mittels eines Siebdruckverfahrens über die Leiterbahnen 13 der Antennenstruktur 10 gedruckt. Das Isolationselement 71 besteht aus einem elektrisch isolierenden Material, welches vorzugsweise ebenfalls in einer pastösen Konsistenz verdruckt wird. Der Siebdruck erfolgt dabei analog zu dem bereits erläuterten Verfahren zum Aufbringen der Antennenstruktur 10. Das Material des Isolationselements 71 wird anhand eines Rakels 40 durch eine entsprechend geformte Sieböffnung 31 eines Siebs 30 auf den Träger 20 gedrückt. Dabei ist zu beachten, dass die Antennenstruktur 10 vorzugsweise wenigstens angetrocknet sein muss, um sicherzustellen, dass die Leiterbahnen 13 durch das Aufbringen des Isolationselements 71 nicht getrennt werden, wodurch der Stromfluss in den Leiterbahnen 13 unterbrochen werden würde. Ebenso sollten sie sich nicht derart verformen, dass sie sich gegenseitig berühren, um einen Kurzschluss zu verhindern.

In einem weiteren Schritt erfolgt dann in der dargestellten Ausführungsform das Aufbringen eines Leiterelements 72, wobei dieses exakt auf dem Isolationselement 71 verläuft. Das Leiterelement 72 wird dabei ebenfalls mittels Siebdruck aufgebracht und stellt in der gezeigten Ausführungsform eine elektrische Verbindung mit dem äußeren Ende 11 der Antennenstruktur 10 her. Es besteht vorzugsweise aus dem gleichen Material wie die Antennenstruktur 10. Das Leiterelement 72 ist somit in der Lage einen in der aus der Antennenstruktur 10 herzustellenden Antenne fließenden Stromfluss in das Innere der Antennenstruktur 10 zu leiten, wodurch ein im Inneren der Antennenstruktur 10 angeordneter RFID-Chip 50 mit beiden Enden 11, 12 verbunden werden kann. Zwischen den Verfahrensschritten ist zumindest eine teilweise Trocknung der bereits auf dem Träger 20 aufgebrachten Elementen bevorzugt. Diese erfolgt dabei aus Zeitgründen bevorzugt aktiv anhand eines entsprechenden Luftstroms bzw. aushärtender Strahlung oder ähnlichem.

Das innere Ende 12 und das anhand der Brücke 70 ebenfalls nach innen geleitete äußere Ende 11 der Antennenstruktur 10 können nun mit einem RFID-chip 50 verbunden werden.

Zur Herstellung eines Kunststoffkörpers wird gemäß dem erfindungsgemäßen Verfahren wie in **Fig. 3** dargestellt, der Träger 20 mit wenigstens einer Laminatschicht 60 laminiert. In der gezeigten Ausführungsform wird von beiden Seiten des Trägers 20 eine Laminatschicht 60 vorgesehen. Dabei wird die Antennenstruktur 10 vollständig durch eine Laminatschicht 60 bedeckt und der Träger 20 mit den Laminatschichten 60 stoffschlüssig verbunden.

Während des Laminierens des Trägers 20 mit der wenigstens einen Laminatschicht 60, wird gleichzeitig ausreichend Energie für einen Sintervorgang der Antennenstruktur 10 eingebracht. Dabei werden die Nanopartikel der leitfähigen Tinte verschmolzen, um somit die Leitfähigkeit zu erhöhen bzw. herzustellen. Insbesondere die Kontaktstellen zum Leiterelement 72 der Brücke 70 bzw. dem RFID-Chip 50 werden so durch ein Verschmelzen des Materials gestärkt. Durch den Sintervorgang wird aus der Antennenstruktur 10 die eigentliche HF-Antenne hergestellt.

Der auf diese Weise hergestellte Kunststoffkörper kann dabei direkt als kartenförmiges Sicherheitsdokument eingesetzt werden oder aber als Inlay verwendet werden, um es in ein entsprechendes Dokument einzusetzen. Ein vollständiges Sicherheitsdokument weist dabei üblicherweise eine Vielzahl unterschiedlicher Schichten auf, während ein Inlay weniger Schichten aufweist und zu weiteren Verarbeitung in ein Endprodukt, wie beispielsweise ein Sicherheitsdokument, eingearbeitet werden kann.

Das erfindungsgemäße Verfahren erlaubt also eine Vielzahl unterschiedlicher Schichten während des Laminationsprozesses miteinander zu verbinden. Dabei folgt der Laminationsprozesses vorzugsweise einer Laminationskurve, welche die Temperatur und/oder den Druck während des Laminierens festlegt. Soll eine Vielzahl unterschiedlicher Schichten miteinander verbunden werden, wird in der Regel eine andere Laminationskurve benötigt, als bei der Verbindung lediglich weniger Schichten.

Gemäß einer bevorzugten Laminationskurve für die Verbindung einer Vielzahl von Schichten werden die zu verbindenden Elemente zunächst über 30 min ausgehend von einer Temperatur von bevorzugt 20 °C konstant auf eine Temperatur von bevorzugt 190 °C aufgeheizt werden und anschließend über 30 min wieder konstant abgekühlt werden. Durch diese Laminationskurve wird selbst bei vielen Schichten ein qualitativ hochwertiger Sinterprozess und Laminationsprozess sichergestellt. Bei der Verbindung lediglich weniger Schichten kann dabei die Aufheiz- und Abkühlphase deutlich kürzer gestaltet werden. Für einen qualitativ hochwertigen Sinterprozess der Antenne ist eine gewisse Sinterzeit auf einem bestimmten Temperaturniveau jedoch erforderlich. Hierzu kann vorzugsweise eine Phase konstanter Temperatur von beispielsweise 7 min bei 190 °C in der Laminationskurve vorgesehen werden.

Vorzugsweise wird während des Laminationsprozesses auf die zu laminierenden Partner, also den Träger 20 und die Laminatschichten 60, zumindest zeitweise flächiger Druck aufgebracht, um die Laminatschichten 60 und den Träger 20 miteinander zu verbinden. In Zeichenebene der Fig. 3 erfolgt dazu entsprechend die Druckapplikation von oben und unten.

Die Leiterbahnen 13 der Antennenstruktur 10 werden vorzugsweise mit einer Dicke (Höhe der aufgebrachten Farbe) von 100 *µm* verdruckt, wobei die Dicke nach dem Sinterprozess noch lediglich 50 *µm* beträgt. Ein üblicher RFID-Chip 50, welcher beispielsweise für die Verwendung in Sicherheitsdokumenten in Frage kommt, weist eine Dicke von ca. 180 *µm* auf. Der Abstand zwischen den Leiterbahnen 13 beträgt vorzugsweise 300 *µm*, um einen Kurzschluss zwischen den Leiterbahnen 13 oder ein Verfließen der Leiterbahnen 13 während des Druck- und Sinterprozesses zu verhindern.

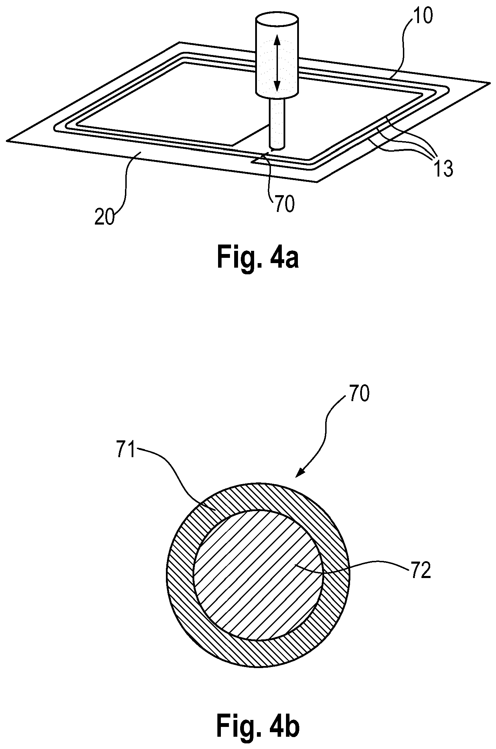

Die **Figs. 4a** und **4b** zeigen eine weitere Ausführungsform eines Verfahrens zur Aufbringung der Brücke 70 auf den Träger 20. In dieser Ausführungsform wird die Brücke 70 durch eine oszillierende Schlagbeanspruchung kraftschlüssig und/oder formschlüssig mit dem Träger 20 bzw. der Leiterbahnen 13 verbunden.

Die Brücke 70 besteht in der gezeigten Ausführungsform wie in Fig. 4b dargestellt aus einem Leiterelement 72 mit rundem Querschnitt, welches radial durch das Isolationselement 71, bevorzugt aus einem Duroplast, isoliert ist. Die derart ausgeführte Brücke 70 wird im Rahmen dieser Anmeldung auch als isoliertes Leiterelement 71 bezeichnet. Durch die oszillierende Schlagbeanspruchung wird Wärmeenergie in das Isolationselement 72 eingebracht, wodurch die kraftschlüssige Verbindung mit dem Träger 20 bzw. den Leiterbahnen 13 entsteht.

An den axialen Enden des Leiterelements 71 wird dieses mit dem äußeren Ende 11 bzw. dem RFID-chip elektrisch verbunden. Dies geschieht vorzugsweise durch einen thermischen Prozess wie einem Löt- bzw. Schweißvorgang an den entsprechenden Stellen. Dabei kann an den Stellen des elektrischen Kontakts das Isolationselement 72 aufgeschmolzen werden und eine stoffschlüssige Verbindung zwischen dem Leiterelement 71 und dem entsprechenden Verbindungspartner hergestellt werden, um somit die elektrische Verbindung sicher zu stellen.

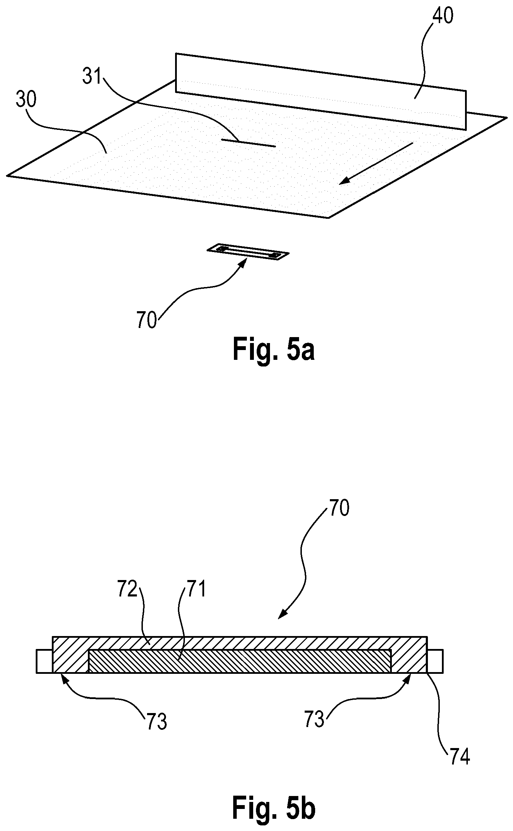

Die **Figs. 5a** und **5b** zeigen eine weitere Ausführungsform eines Verfahrens zur Aufbringung der Brücke 70 auf den Träger 20. Hierzu wird zunächst ein Isolationselement 71 bereitgestellt, welches als isolierende Unterlage dient. Das Isolationselement 71 ist als flache Platte aus einem elektrisch nichtleitenden Material ausgebildet und weist zwei Verbindungsöffnungen 74 auf. Anschließend wird ein Leiterelement 72 derart auf dem Isolationselement 71 aufgebracht, dass es zwischen den beiden Verbindungsöffnungen 74 vorgesehen ist und diese zumindest teilweise ausfüllt, sodass in den Verbindungsöffnungen 74 elektrische Kontaktpunkte 73 gebildet werden.

Fig. 5a zeigt dabei eine Möglichkeit das Leiterelement 72 mittels eines Siebdruckverfahrens auf dem Isolationselement 71 aufzubringen. Dazu wird, wie im Hinblick auf das Aufbringen der Antennenstruktur 10 auf dem Träger 20 anhand Fig. 1 beschrieben, eine leitfähige Tinte, vorzugsweise pastöser Konsistenz, mittels eines Rakels 40 durch eine Sieböffnung 31 eines Siebs 30 gedrückt, um so die gewünschte Geometrie des Leiterelements 72 auf dem Isolationselement 71 zu erzeugen. Vorzugsweise wird dabei für die Ausbildung des Leiterelements 72 das gleiche Material verwendet wie zur Ausbildung der Antennenstruktur 10.

Die vorgefertigte Brücke kann anschließend so auf den Träger 20 (s. bspw. Fig. 1) aufgebracht werden, dass eine der Kontaktpunkte 73 auf dem über die Leiterbahnen 13 zu leitenden Ende der Antennenstruktur 10 angeordnet wird. Das elektrisch nichtleitende Isolationselement 71 liegt dabei auf den Leiterbahnen 13 auf und isoliert somit das Leiterelement 72. Um die elektrische Verbindung zwischen den Kontaktpunkten 73 und den entsprechenden Verbindungspartnern sicherzustellen, wird bevorzugt ein thermisches Verfahren, insbesondere ein Schweiß - oder Lötverfahren angewendet, um die elektrische Verbindung sicherzustellen.

Die Brücke 70 kann ebenso auf einer noch nassen als auch einer trockenen Antennenstruktur 10 verlegt werden und fordert nicht zwangsweise eine Zwischentrocknung der Antennenstruktur 10. Vorzugsweise erfolgt nach dem Verbinden der Brücke 70 mit der Antennenstruktur 10 eine Trocknung der Antennenstruktur 10 und des Leiterelements 72 der Brücke 70 und anschließend das Laminieren.

## Patentansprüche

1. Verfahren zur Herstellung einer Antenne in einem Kunststoffkörper, aufweisend die folgenden Schritte,
Aufbringen einer leitfähigen Tinte auf einem Träger (20) in einem ersten Schritt derart, dass sie eine spiralförmige Antennenstruktur (10) mit einem inneren Ende (12) und einem äußeren Ende (11) bildet, wobei das innere Ende (12) innerhalb und das äußere Ende (11) außerhalb von Leiterbahnen (13) der spiralförmigen Antennenstruktur (10) angeordnet ist,
Aufbringen einer Brücke (70) in einem nächsten Schritt, bestehend aus einem Isolationselement (71) und einem Leiterelement (72), wobei die Brücke (70) derart angeordnet wird, dass das Leiterelement (72) eines der Enden der Antennenstruktur (10) über wenigstens einen Teil der Leiterbahnen (13) der spiralförmigen Antennenstruktur (10) mit einem Punkt auf der anderen Seite der Leiterbahnen (13) elektrisch verbindet und das Leiterelement (72) gegen die Leiterbahnen (13) durch das Isolationselement (73) elektrisch isoliert ist, und
Laminieren des Trägers (20) mit wenigstens einer Laminatschicht (60), welche die Antennenstruktur (10) vollständig bedeckt, wobei die Temperatur und Dauer des Laminierens derart gewählt werden, dass die Antennenstruktur (10) während des Laminierens gesintert wird.

2. Verfahren gemäß dem vorhergehenden Anspruch, wobei die leitfähige Tinte eine pastöse Konsistenz aufweist.

3. Verfahren gemäß einem der vorhergehenden Ansprüche, wobei das Aufbringen der Tinte mittels eines Siebdruckverfahrens erfolgt.

4. Verfahren gemäß einem der vorhergehenden Ansprüche, wobei das Aufbringen der Brücke (70) durch Aufbringen des Isolationselements (71) und einem anschließenden Aufbringen des Leiterelements (72) auf dem Isolationselement (71) mittels eines Druckverfahrens, insbesondere mittels eines Siebdruckverfahrens erfolgt.

5. Verfahren gemäß einem der vorhergehenden Ansprüche 1 bis 3, wobei die Brücke (70) durch ein vorgefertigtes Isolationselement (71) mit zwei Verbindungsöffnungen (74) gebildet wird, auf welches mittels Siebdrucks ein Leiterelement (72) derart aufgebracht wird, dass das Leiterelement (72) durch die Verbindungsöffnung (74) elektrische Kontaktpunkte (73) bilden kann.

6. Verfahren gemäß einem der vorhergehenden Ansprüche 1 bis 3, wobei das Aufbringen der Brücke (70) in Form eines isolierten Leiterelements (72) erfolgt, wobei insbesondere das Leiterelement (72) mit der Antennenstruktur mittels Schweißen verbunden wird.

7. Verfahren gemäß dem vorhergehenden Anspruch, wobei das isolierte Leiterelement (72) mittels einer oszillierenden Schlagbeanspruchung auf den Träger (20) aufgebracht wird.

8. Verfahren gemäß einem der vorhergehenden Ansprüche, wobei die Brücke (70) zunächst vorgefertigt wird und im vorgefertigten Zustand auf dem Träger (20) montiert wird.

9. Verfahren gemäß einem der vorhergehenden Ansprüche, wobei zum Laminieren des Trägers (20) mit der Laminatschicht, beide innerhalb eines festgelegten Zeitraums, insbesondere innerhalb 30 min, auf eine festgelegte Zieltemperatur, insbesondere 190°C, erhitzt wird und anschließend gleichmäßig innerhalb eines weiteren festgelegten Zeitraums, insbesondere innerhalb 30 min, wieder abgekühlt wird.

10. Sicherheitsdokument, aufweisend wenigstens eine durch ein Verfahren gemäß einem der Ansprüche 1 bis 9 hergestellten Antenne.

## Claims

1. Method for producing an antenna in a plastics body, comprising the following steps,
applying a conductive ink to a carrier (20) in a first step such that it forms a spiral antenna structure (10) having an inner end (12) and an outer end (11), wherein the inner end (12) is arranged inside and the outer end (11) is arranged outside conductor tracks (13) of the spiral antenna structure (10),
applying a bridge (70) consisting of an insulating element (71) and a conductor element (72) in a next step, wherein the bridge (70) is arranged such that the conductor element (72) electrically connects one of the ends of the antenna structure (10) via at least a part of the conductor tracks (13) of the spiral antenna structure (10) to a point on the other side of the conductor tracks (13) and the conductor element (72) is electrically insulated from the conductor tracks (13) by the insulating element (73), and
laminating the carrier (20) with at least one laminate layer (60) which completely covers the antenna structure (10), wherein the temperature and duration of the lamination are selected such that the antenna structure (10) is sintered during the lamination.

2. Method according to the preceding claim, wherein the conductive ink has a pasty consistency.

3. Method according to either of the preceding claims, wherein the ink is applied by means of a screen printing method.

4. Method according to any of the preceding claims, wherein the application of the bridge (70) is carried out by application of the insulating element (71) and a subsequent application of the conductor element (72) on the insulating element (71) by means of a printing method, in particular by means of a screen printing method.

5. Method according to any of the preceding claims 1 to 3, wherein the bridge (70) is formed by a prefabricated insulating element (71) having two connection openings (74), to which a conductor element (72) is applied by means of screen printing in such a way that the conductor element (72) can form electrical contact points (73) through the connection opening (74).

6. Method according to any of the preceding claims 1 to 3, wherein the bridge (70) is applied in the form of an insulated conductor element (72), wherein in particular the conductor element (72) is connected to the antenna structure by means of welding.

7. Method according to the preceding claim, wherein the insulated conductor element (72) is applied to the carrier (20) by means of an oscillating impact load.

8. Method according to any of the preceding claims, wherein the bridge (70) is first prefabricated and is mounted on the carrier (20) in the prefabricated state.

9. Method according to any of the preceding claims, wherein in order to laminate the carrier (20) with the laminate layer, both are heated to a specified target temperature, in particular 190°C, within a specified period of time, in particular within 30 minutes, and are then cooled again uniformly within a further specified period of time, in particular within 30 minutes.

10. Security document comprising at least one antenna manufactured by a method according to one of claims 1 to 9.

## Revendications

1. Procédé permettant la fabrication d'une antenne dans un corps en plastique, présentant les étapes suivantes
application d'une encre conductrice sur un support (20) dans une première étape de manière à former une structure d'antenne (10) en spirale comportant une extrémité intérieure (12) et une extrémité extérieure (11), dans lequel l'extrémité intérieure (12) est disposée à l'intérieur et l'extrémité extérieure (11) est disposée à l'extérieur de pistes conductrices (13) de la structure d'antenne (10) en spirale,
application d'un pont (70) constitué d'un élément isolant (71) et d'un élément conducteur (72) dans une étape suivante, dans lequel le pont (70) et disposé de telle sorte que l'élément conducteur (72) relie électriquement l'une des extrémités de la structure d'antenne (10) à un point situé de l'autre côté des pistes conductrices (13) par l'intermédiaire d'au moins une partie des pistes conductrices (13) de la structure d'antenne (10) en spirale, et l'élément conducteur (72) est isolé électriquement des pistes conductrices (13) par l'élément isolant (73), et
stratification du support (20) comportant au moins une couche stratifiée (60) qui recouvre complètement la structure d'antenne (10), dans lequel la température et la durée de la stratification sont choisies de telle sorte que la structure d'antenne (10) est frittée lors de la stratification.

2. Procédé selon la revendication précédente, dans lequel l'encre conductrice présente une consistance pâteuse.

3. Procédé selon l'une des revendications précédentes, dans lequel l'application de l'encre est réalisée à l'aide d'un procédé d'impression sérigraphique.

4. Procédé selon l'une des revendications précédentes, dans lequel l'application du pont (70) est réalisée par application de l'élément isolant (71), suivie d'une application de l'élément conducteur (72) sur l'élément isolant (71) à l'aide d'un procédé d'impression, en particulier par un procédé d'impression sérigraphique.

5. Procédé selon l'une des revendications précédentes 1 à 3, dans lequel le pont (70) est formé par un élément isolant (71) préfabriqué comportant deux ouvertures de liaison (74), un élément conducteur (72) étant appliqué par impression sérigraphique sur l'élément isolant préfabriqué, de telle sorte que l'élément conducteur (72) puisse former des points de contact électrique (73) à travers l'ouverture de liaison (74).

6. Procédé selon l'une des revendications précédentes 1 à 3, dans lequel l'application du pont (70) est réalisée sous la forme d'un élément conducteur (72) isolé, dans lequel l'élément conducteur (72) est en particulier relié à la structure d'antenne à l'aide d'un soudage.

7. Procédé selon la revendication précédente, dans lequel l'élément conducteur (72) isolé est appliqué sur le support (20) à l'aide d'une contrainte d'impact oscillante.

8. Procédé selon l'une des revendications précédentes, dans lequel le pont (70) est d'abord préfabriqué et est monté à l'état préfabriqué sur le support (20).

9. Procédé selon l'une des revendications précédentes, dans lequel, pour la stratification du support (20) comportant la couche stratifiée, les deux sont chauffés à une température cible prédéterminée, en particulier 190 °C, en l'espace d'une période de temps prédéterminée, en particulier en l'espace de 30 minutes, et sont ensuite refroidis de manière uniforme en l'espace d'une autre période de temps prédéterminée, en particulier en l'espace de 30 minutes.

10. Document de sécurité comportant au moins une antenne fabriquée selon un procédé conforme à l'une des revendications 1 à 9.
